# DEMANDE DE BREVET EUROPEEN

(11) **EP 1 050 836 A1**
(43) Date de publication de la demande: **08.11.2000**
(21) Numéro de dépôt: 99670005.0
(22) Date de dépôt: 06.05.1999
(51) Int. Cl.: G06F 17/60

(54) **Menu électronique**

(71) Demandeur: Loureiro Pinto, José, 4730 Vila Verde (PT); Silva Fernandes, Fernando Agostinho, Braga (PT); Furtado Maia, Ant nio Manuel, Açores (PT)
(72) Inventeur: Loureiro Pinto, José, 4730 Vila Verde (PT); Silva Fernandes, Fernando Agostinho, Braga (PT); Furtado Maia, Ant nio Manuel, Açores (PT)
(74) Mandataire: Pelayo de Sousa Henriques, Rui

(57) **Abrégé**

Dispositif de récolte et gestion d'information, de chargement par l'utilisateur final, par moyen de sélection directe des items voulus entre ceux compris dans une carte présentée en support mobile, d'utilisation préférentielle en restaurants, notamment dans les respectives cartes menus des plats et articles disponibles.

Le dispositif est caractérisé en ce que chaque carte (1) a un clavier incorporé qui, dans la version préférentielle, est un clavier avec des contacts ouverts présenté en bourses transparentes et flexibles, selon la représentation de la figure 2, en annexe, clavier où à chaque article correspond un contact et qui permet au client de sélectionner directement les articles voulus, ainsi que la respective quantité, l'augmentant ou diminuant ; et en ce que les diverses feuilles de la carte (1) sont introduites dans les dites bourses, faisant aligner les divers items avec les respectifs contacts de la portion du clavier intégrée dans la bourse correspondante, alignement fait selon une relation biunivoque.

Selon ce dispositif l'interrelation du système central avec les cartes périphériques fonctionne à base d'un programme d'ordinateur compris par divers modules, une caractéristique additionnelle étant le fait que l'information arrive au lieu de préparation des aliments séparée en groupes, où chaque groupe concerne un client ou groupe de clients.

## Description

### Domaine technique

Ce dispositif, qui rend possible la récolte d'information directement sélectionnée par l'utilisateur final dans une carte présentée en support mobile et l'ultérieure gestion centralisée de l'information provenant de plusieurs cartes du type indiqué, est particulièrement doué pour l'utilisation en restaurants, "self-services" et établissements spécialisés dans la préparation de repas pour emporter - "take-away" - remplaçant les traditionnelles cartes menus en papier.

### Etat de la technique

Dans les restaurants, traditionnellement, le client demande l'aide d'un serveur pour indiquer les plats qu'il a choisit, et ce dernier note la demande dans un bloc-notes et la fait parvenir à la cuisine pour que les plats à servir soient préparés.

Cette méthode, présente divers inconvénients, dont on donne du relief à l'introduction d'erreurs (changements ou omissions) au moment de l'indication de la demande du client au serveur et aussi, après, au moment de la transmission de la demande à la cuisine, soit, une fois de plus, à cause d'erreurs du serveur, soit à cause de la mauvaise interprétation de sa calligraphie par les cuisiniers.

En autre, dans les établissements où les serveurs, au lien de noter la demande dans un bloc, la dictent directement à la cuisine, une ambiance très bruyante est créée et, en plus, tout le monde connaît ce qu'un certain client a demandé.

Un autre moyen usuel est celui dans lequel les serveurs, avant de passer la demande à la cuisine, l'introduisent manuellement dans une ou plus caisses enregistreuses, liées en réseau ou pas, lesquelles émissent une souche avec la demande qui est alors délivrée à la cuisine.

Plus récemment, dans quelques établissements plus modernes, les serveurs (ou, plus généralement, un seul, chargé spécifiquement de cette tâche) ont des blocs-notes électroniques, où ils notent les demandes, transmettant après ces demandes vers un terminal d'ordinateur qui permet que la demande soit envoyée à la cuisine où elle est imprimée dans une petite imprimante.

Ce système, quoique permettant de résoudre certains des problèmes ci-dessus énoncés, ne dispense pas l'existence du serveur chargé de la fonction de noter les demandes, des erreurs ou omissions dans les demandes pouvant tout de même être faites et, en plus, les clients doivent continuer à attendre que le serveur vienne les servir.

En autre, les clients continuent conditionnés par le vieux problème d'avoir à faire la demande d'une fois (le dessert inclus) dès le début, ou, alternativement, d'attendre le serveur chaque fois qu'ils veuillent demander quelque chose de plus.

### Description de l'invention

Ce dispositif est constitué par cartes présentées en supports mobiles, c'est-à-dire, cartes avec l'aspect des cartes menus traditionnelles - qui ne sont plus que des cartons pliés avec quelques feuilles où l'on trouve discriminés les divers plats et autres articles qui peuvent être demandés et les respectifs prix - où, cependant, existe un clavier qui permet au client d'être lui-même à indiquer dans la dite carte quels sont les articles qu'il désire demander, ainsi que les respectives quantités.

En autre, chaque carte a une petite mémoire locale et dispositifs I/O (entrée et sortie d'information) par moyen desquels il est possible transmettre les demandes vers le système central et recevoir de celui-ci indications utiles, comme, par exemple, celles relatives aux plats qui ne sont plus disponibles.

Toutes les demandes sont déchargées dans un système centralisé qui est chargé de les faire parvenir au local d'emballage ou de préparation des produits, notamment à la cuisine.

Les demandes arrivent à la cuisine en groupes séparés, chaque groupe concernant un certain client ou groupe de clients, permettant donc que la préparation de tous les plats ayant relation entre eux se fasse de façon à ce que ceux qui prennent moins de temps pour être préparés ne soient pas servis beaucoup avant les autres.

Les cartes ont aussi un écran qui permet au client non seulement de visualiser et d'éditer les articles compris dans la demande en cours, mais aussi de voir des messages provenant du système central, ainsi qu'un système d'alimentation d'énergie.

### Mode préférable de matérialisation de l'invention

Préférablement, la concrétisation de l'invention est accomplie faisant recours à des cartes constituées par des bourses plastiques, individuelles, transparentes, flexibles et dotées d'un clavier constitué par divers contacts ouverts qui peuvent être fermés par moyen d'un pointeur de pointe métallique lié par un fil conducteur, ou moyen équivalent, à un circuit électronique introduit dans le carton plié de la carte.

Dans chaque bourse est introduite une feuille conventionnelle de papier avec les divers articles disponibles, feuille qui, une fois placée dans la bourse mentionnée, a les lignes imprimées dûment alignées avec les contacts mentionnés auparavant.

Ainsi, la formulation à nouveau des cartes est aussi simple que la formulation à nouveau des cartes en papier traditionnelles, suffisant d'informer l'ordinateur central quel est l'article correspondant à un contact donné.

À cet effet, chaque contact est référencé par un numéro individuel, par exemple, le numéro d'ordre dans la relation de produits apparaissant dans une certaine feuille, plus l'indication du numéro de la feuille en question.

Ainsi, développant l'exemple, dès que le système central est informé que l'article qui apparaît à la ligne 5 de la feuille 1 est "truite rôtie", toutes les fois qu'un client, dans sa carte, pousse le contact correspondant à "truite rôtie", c'est-à-dire, le contact qui est devant la ligne où est écrit le nom du plat en question - lequel en toutes les cartes occupera la position correspondante à la ligne 5 de la feuille 1 - le système sera informé du plat choisi, ainsi que de la respective quantité, dés que la demande est déchargée de la carte en question.

La dite quantité est sélectionnée de façon identique à celle de la sélection de l'article proprement dit, utilisant à l'effet les contacts numériques, existant préférablement aussi en chaque bourse.

En autre les contacts déjà mentionnés, il y a d'autres destinés à la visualisation et édition des divers articles et respectives quantités déjà sélectionnées.

Une fois la demande prête, le client l'envoie vers le système central poussant un contact existant à cet effet.

Si la demande ou ses additions ultérieures ont été introduites et elles n'ont pas été transmises vers le système central par le client, la carte émettra un avis sonore et/ou lumineux à la fin d'un temps prédéterminé.

Chaque carte a aussi un interrupteur qui l'éteint quand elle est fermée après avoir transmis vers le système central la demande ou la dernière addition à celle-ci.

Au cas ou un article ou plat n'est plus disponible, le système central informera toutes les cartes actives de ce fait. En autre, toutes les fois qu'une carte est activée de nouveau (par moyen de la simple ouverture de son carton plié) un signal est envoyé au système central, lequel tout de suite actualise la carte en ce qui concerne l'information sur plats qui ne sont plus disponibles, etc.

Toutes les fois que le client essaye de sélectionner un article qu'entre-temps n'est plus disponible, la carte émettra un avis indiquant que le produit en question n'est plus disponible.

Toutes les fois qu'un numéro prédéterminé d'articles n'est plus disponible, le système central pourra imprimer des nouvelles feuilles pour remplacer les existantes dans les diverses cartes. Dans les nouvelles feuilles les articles qui ne sont plus disponibles ne seront pas inclus. L'actualisation des correspondances entre les produits restants et les respectives nouvelles positions dans les cartes pourra, dans ce cas, être établie automatiquement par le programme du système central.

Si l'on veut, on pourra introduire dans les cartes des feuilles avec l'indication des articles en idiome étranger, le dispositif continuant à fonctionner de la même manière, une fois que le système central ne tient compte que de la position de l'article dans la carte. La seule règle à respecter est la position (feuille et ligne) de la traduction que doit être la même de l'original.

### Description des figures

Dans les figures en annexe, présentées à titre d'exemple non limitatif, on peut observer :
- À la figure 1, la représentation schématique des éléments intégrants de chaque support mobile compris dans chaque une des cartes intégrantes du dispositif ;
- À la figure 2, la représentation d'une configuration possible du clavier mentionné auparavant, à propos de la description du mode préférable de matérialisation de l'invention ;
- À la figure 3, la représentation schématique du dispositif ;
- À la figure 4, la représentation du diagramme fonctionnel du programme d'ordinateur intégrant du dispositif.

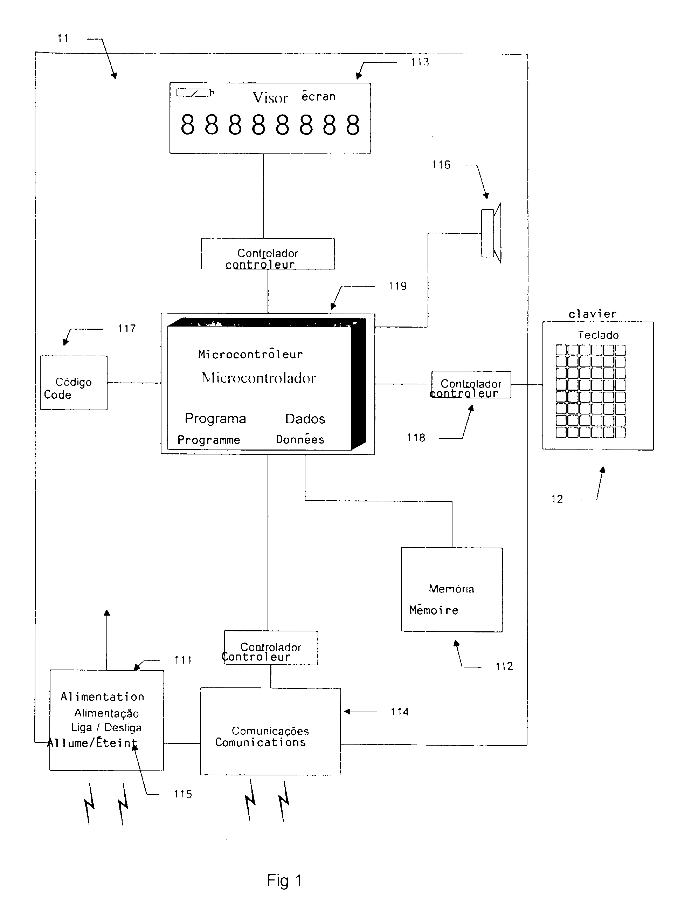

D'après la configuration représentée à la figure 1, toutes les bourses (12) d'une carte seront interconnectées à une plaque électronique (11) placée dans la partie postérieure de la carte menu, plaque qui contient un système (111) d'alimentation d'énergie - lequel peut être une simple batterie, rechargeable ou non, ou un système alternatif d'alimentation, par exemple, constitué à base de cellules photovoltaïques - une mémoire d'emmagasinage de données (112) et respectif contrôleur ; un écran (113) et respectif contrôleur ; un dispositif de I/O (114), pour entrée et sortie d'information, et respectif contrôleur ; un interrupteur (115) temporisé pour couper l'alimentation et épargner de l'énergie ; un avertisseur (116) de l'état de la demande (communiquée au système central ou non) ; un composant (117) du type "write once" (écrire une fois) avec un code gravé ; un contrôleur (118) de clavier ; et un microprocesseur (119).

En autre, il pourra exister un avertisseur de baisse charge de batterie, lequel pourra être intégré dans le mentionné écran (113).

En ce qui concerne l'alimentation d'énergie, selon de mode préférable de matérialisation de l'invention, on fait recours à des batteries rechargeables, comprenant dans chaque carte un système de chargement de la batterie sans contact ou liaison physique.

Les cartes (1) sont constituées par la plaque électronique (11) et par diverses bourses (12) chacune avec une portion du clavier total.

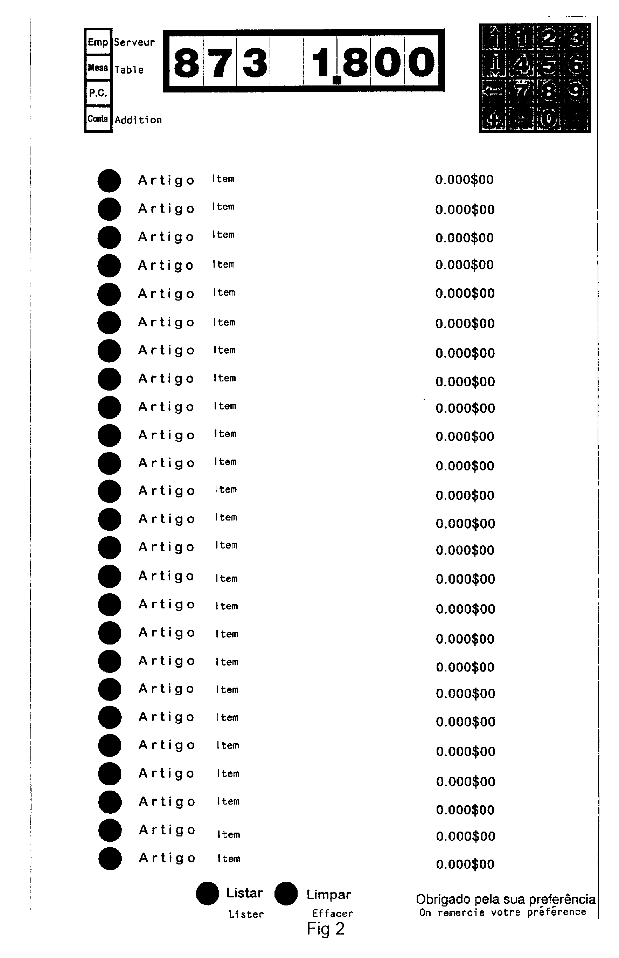

Selon la configuration représentée à la figure 2, chaque feuille de la carte, introduite dans la respective bourse (12) dotée d'une partie du total du clavier, contient "n" items - "n/2" dans chaque page - chacun correspondant à un point du clavier ouvert. En autre, il existe : un point pour chacun des numéros de 0 à 9 ; un point de contact pour introduire décimaux ; un point de contact pour faire la soustraction de la quantité d'un item donné et un autre pour ajouter ; un point de contact pour correction totale des demandes sélectionnées avant ; un ou plus points de contact pour faire avancer en avant ou en arrière dans l'écran les demandes déjà faites ; un point de contact pour demander l'addition ; un point de contact pour introduire le numéro du serveur chargé de servir les plats ou de présenter l'addition; un point de contact pour introduire le numéro de la table et un point de contact pour envoyer la demande vers le système central.

Quoique le clavier et son utilisation, à cause de la simplicité du système, soient extrêmement intuitifs, quelques notes explicatives pourront être inclues en chaque carte.

En autre ceux indiqués auparavant, d'autres points de contact pourront évidement être prévus pour d'autres fonctions, sans que l'esprit de l'invention soit modifié.

De la même manière, il pourra exister un seul clavier numérique pour les numéros 0 à 9, placé, par exemple, dans la partie intérieure du carton plié de la carte, au lieu de toutes les bourses ayant des points de contacts correspondants à des tels numéros. Le même peut arriver avec les points de contact relatifs aux autres fonctions, comme, par exemple, celle de demander l'addition.

À la limite, dans une autre matérialisation de l'invention, qui n'est pas la préférable, les points de contact relatifs aux propres articles ou plats disponibles dans l'établissement pourront ne pas exister, les articles étant sélectionnés dans un seul clavier à la base d'une référence numérique. À cet effet, on utiliserait numéros de référence placés dans une colonne devant les articles contenus dans la carte.

Evidement, au lieu des numéros on pourrait utiliser des lettres ou symboles graphiques, dépendant du type d'écran utilisé, du clavier en question et de la propre capacité du système, notamment en ce qui concerne la mémoire et le traitement d'information, laquelle, en principe, n'est conditionnée que par le facteur coût.

Considérant précisément ce dernier, le mode préférable de matérialiser cette invention consiste en l'utilisation de bourses tout égales, avec les points de contact correspondants à chaque article et les autres points mentionnés auparavant, bourses qui sont intégrées dans une carte dotée d'un écran numérique avec point décimal, où apparaît la référence numérique des articles choisis, ainsi que la quantité prétendue.

Versions plus élaborées pourront comprendre encore un tableau graphique avec "touch-screen" (sélection par touche dans l'écran), ainsi que traitement de voix, pour indiquer, dans l'idiome prétendu, le menu ou autres éléments d'intérêt. En autre, chaque carte peut aussi comprendre l'existence de moyens destinés à recevoir le paiement du client par moyen électronique, soit par porte-monnaie électronique, soit par carte de débit ou crédit ou un quelconque autre moyen similaire.

En plus, à la fois de la touche pour introduction du numéro de la table et du serveur, ces données pourront être gravées en mémoire étant transmises au système central automatiquement toutes les fois qu'il soit nécessaire.

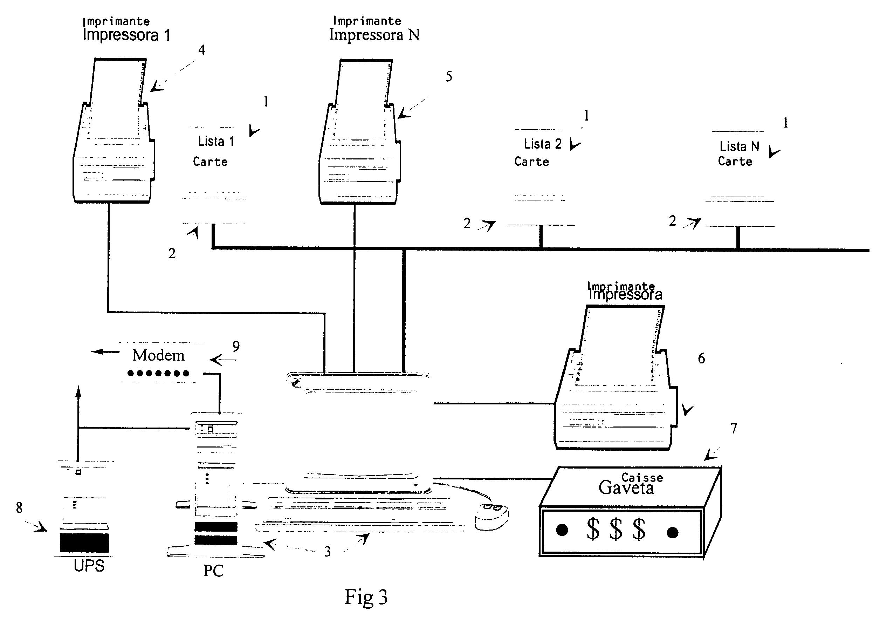

Dans la figure 3, on peut visualiser le dispositif dans sa globalité.

Les plusieurs cartes (1) communiquent par moyen des respectifs lecteurs/informateurs émetteurs/récepteurs (2) avec l'ordinateur central (3) et celui-ci envoie les demandes vers la(les) imprimante(s) (4) de la cuisine et les demandes de l'addition vers la(les) imprimante(s) de facturation (5). Une ou plusieurs imprimantes auxiliaires (6) pourront imprimer les feuilles à introduire dans les bourses des diverses cartes.

La facturation et le contrôle de la caisse (7) seront aussi faits de façon centralisée, le système entier, ou au moins ses parties fondamentales, étant alimenté par un système permanent (8) d'alimentation d'énergie (UPS).

En autre, moyens (9) de I/O (entrée et sortie d'information) pourront être utilisés, notamment pour effets de service à distance ou assistance au dispositif.

L'existence en chaque carte (1) du code gravé dans le composant (117), code qui est transmis avec chaque demande émise par la carte en question, n'incite pas au vole des cartes. En effet, le code de chaque établissement est individuel et le système central de traitement n'accepte que les demandes transmises par cartes qui ont le code correct. Pour l'évaluation de la validité des cartes par le système central, le code est toujours envoyé automatiquement avec l'information de chaque demande.

Les communications entre chaque carte et l'ordinateur central seront préférablement conduites par moyen de lecteurs (2) individuels. Chaque lecteur sera associé à une certaine carte et sera responsable par la communication de celle-ci avec le système central. En autre, le lecteur pourra comprendre encore le système de chargement de la batterie de la carte respective. Ce système, selon le dit auparavant, n'a pas de liaison par des fils pour maintenir la mobilité de la carte.

En plus des éléments physiques mentionnés auparavant, le fonctionnement du dispositif est supporté par un programme d'ordinateur (logiciel) responsable par l'intégration de tout le système.

En autre, en chaque carte (1), existe aussi un programme de contrôle, responsable par l'interaction de la transmission de l'information de/vers le client.

Le programme local essentiellement permet supporter l'information reçue par moyen du clavier et son édition. Ainsi, chaque carte permet le choix de produits et respectives quantités et bien la visualisation immédiate, à l'écran (113), de tous les items de la demande en cours.

Fonctions pour effacer sont aussi prévues.

Si le choix est incomplet, erroné ou l'article n'est plus disponible, le programme se chargera d'activer un avis d'avertissement au client.

Avec la demande, les articles qui ne sont plus disponibles et qui avait été initialement sélectionnés, avant d'être remplacés par d'autres, seront transmis, à côté, au système central. En ce faisant, à l'avenir, les quantités peuvent être adaptées le plus possible au goût des clients.

Le contrôle de la temporisation inhérent à l'activation de l'avertisseur (116) peut aussi être fait par le programme de microcontrôleur (microprocesseur) local.

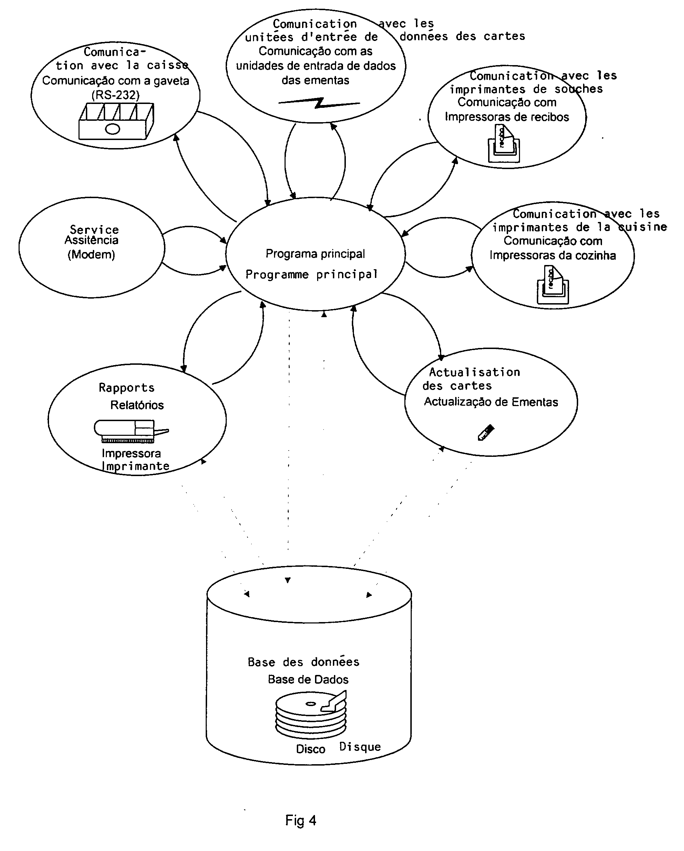

En ce qui concerne le programme d'ordinateur du système central, schématiquement représenté à la figure 4, existent divers modules, desquels on fait ressortir: un module de communication avec les diverses cartes, comprenant protocole de détection d'erreurs de transmission et demande de renvoi d'information s'il y a la détection d'une quelconque erreur ; un module de comptabilité et facturation, comprenant la préparation des factures et son envoi vers les diverses imprimantes ; et un module de gestion de l'information concernant les demandes, ainsi que son envoi, en groupes, vers les imprimantes de la cuisine.

L'envoi des demandes vers la cuisine est toujours fait dans l'idiome du pays dans lequel le système est installé. Par contre, l'émission de souches de vente ou le calcul de la monnaie à rendre pourront être faits dans un quelconque idiome ou monnaie selon le demandé par le client. Le module de facturation avant mentionné est interconnecté au module de contrôle de la caisse, par exemple, par moyen d'une porte RS-232, à fin de permettre de garder l'argent reçu et donner de la monnaie aux clients.

En autre, le programme d'ordinateur du système central a aussi un module d'actualisation de menus, c'est-à-dire, un module à travers duquel il est possible d'indiquer au système qu'un certain plat n'est plus disponible, de façon à ce que celui transmette cette information aux diverses cartes actives ou aux inactives dès que celles sont activées de nouveau. Les nouvelles feuilles pour introduire dans les diverses cartes pourront être encore imprimées, quand les menus subissent des changements significatifs.

L'impression des feuilles à placer dans les cartes menus pourra être faite au moyen du module d'impression de rapports. Ce module sera aussi responsable par l'impression de rapports de comptabilité ou statistiques, car le système central peut encore avoir un module de stocks et un module de gestion avec la création de divers graphiques.

Un dernier module additionnel permet la manutention du système par contrôle à distance, faisant recours, par exemple, à la communication via modem.

Au cas ou le module de communication entre les diverses cartes ne réussit pas à obtenir de renvoi de la communication sans erreurs, la partie de la demande correcte sera envoyée et un avertissement spécial émis informant que le restant de la demande n'a pas passé, pour qu'un fonctionnaire puisse aller personnellement faire la correction de la situation.

## Revendications

1. Dispositif de récolte et gestion d'information, de chargement par l'utilisateur final, par moyen de sélection directe des items voulus de ceux compris dans une carte présentée en support mobile, où chaque carte (1) a un clavier incorporé qui permet au client de sélectionner directement les articles voulus, ainsi que la respective quantité, l'augmentant ou diminuant ; où tel clavier est lié à une petite mémoire local (112) ; où la carte mobile en question a des dispositifs (114) de I/O qui lui permettent de décharger vers un système central (3) la demande faite par l'utilisateur final et de charger de l'information à partir d'un tel système, notamment celle relative à des ruptures ponctuelles de la capacité pour fournir certains articles ; où l'information provenante de toutes les cartes (1) est traitée de façon centralisée et les demandes sont directement envoyées vers le local (4) d'emballage ou préparation des produits ; et où chaque carte a aussi un écran (113) qui permet non seulement de visualiser et d'éditer les articles compris dans la demande en cours, mais aussi de visualiser messages provenantes du système central ; caractérisé en ce que l'information arrive au dit local (4) séparée en groupes, où chaque groupe concerne un client ou groupe de clients, et en ce que le clavier mentionné est matérialisé en diverses bourses (12) plastiques, individuelles et transparentes, dans lesquelles le dit clavier est distribué, bourses où les diverses feuilles de la carte (1) sont introduites, faisant aligner les divers items avec les respectifs contacts de la portion du clavier intégré dans la bourse correspondante, alignement fait selon une relation biunivoque.

2. Dispositif selon la première revendication, caractérisé en ce, préférablement, la batterie (111) est rechargeable et le chargement est fait par moyen d'un chargeur externe sans liaison par moyen de fils ou un autre contact physique direct entre le chargeur et la batterie.

3. Dispositif selon la première revendication, caractérisé en ce que, préférablement, le clavier a aussi contacts correspondants à un clavier numérique, ainsi que contacts destinés à l'édition dans l'écran des articles sélectionnés, à l'élimination de choix antérieurs, à l'appel des serveurs, à la demande de l'addition, à l'envoi de la demande vers le système central et à l'introduction d'autre type d'information.

4. Dispositif selon la première revendication, caractérisée en ce qu'il a un avertisseur (116) qui est activé à la fin d'un certain période de temps prédéterminé (réglable), quand est sélectionné dans la carte un nouvel article, ou fait un quelconque changement, et la respective demande n'a pas été envoyée au système central dans le dit période de temps.

5. Dispositif selon la première revendication, caractérisée en ce qu'il a un interrupteur (115) - préférablement temporisé - qui place hors de fonctionnement une carte qui est fermée et qui, quand une carte est ouverte, déclenche l'envoie d'un signal vers le système central qui apporte celui-ci à actualiser la carte où le mentionné interrupteur est installé.

6. Dispositif selon la première revendication, caractérisée en ce que, préférablement, la sélection des articles est faite par moyen d'un pointeur de pointe métallique fixé à la carte et en ce que le clavier est constitué par une série de contacts ouverts.

7. Dispositif selon la première revendication, caractérisée en ce que chaque carte a un code gravé dans un composant (117), code qui est envoyé avec les données de chaque demande et qui est identique pour toutes les cartes du même établissement et sans lequel le respectif système central de traitement, sensible seulement à un tel code, n'accepte pas la demande transmise.

8. Dispositif selon la première revendication, caractérisée en ce que le système central envoie vers les cartes actives l'indication des produits qui ne sont plus disponibles et en ce que la carte émet un avertissement quand un article qui n'est plus disponible est sélectionné ou est faite une sélection erronée ou incomplète ou incorrecte à la suite d'un quelconque autre motif.

9. Dispositif selon la première et la deuxième revendications, caractérisée en ce que, préférablement, la communication entre les cartes mobiles et le système central est faite par moyen de lecteurs/informateurs (2) et en ce que, encore dans une version préférable, les dispositifs de chargement de batteries à la distance sont intégrés dans les lecteurs/informateurs (2).

10. Dispositif selon la première revendication, caractérisée en ce que le système central et sa interrelation avec les cartes périphériques fonctionnent à base d'un programme d'ordinateur qui comprend un module de communication avec les diverses cartes, y inclus le protocole de détection d'erreurs de transmission et la demande de renvoi d'information si une erreur est détectée ; un module de comptabilité, et facturation, comprenant la préparation des factures et sa transmission vers les diverses imprimantes ; un module de gestion de l'information relative aux demandes, ainsi qu'à la transmission de l'information, en groupes, vers les imprimantes de la cuisine ; un module destiné à l'émission de souches de vente et au calcul de la monnaie à rendre qui pourront être faits en n'importe quel idiome et monnaie, module qui est lié à un autre de contrôle de la caisse, notamment faisant recours à une porte RS-232 ; un module d'actualisation des menus, comprenant l'impression automatique de nouvelles feuilles pour introduire dans les cartes et l'actualisation correspondante de la relation biunivoque entre la position des articles dans les bourses et les correspondants contacts des diverses portions du clavier comprises dans les dites bourses.

11. Dispositif selon la première et la dixième revendications, caractérisée en ce que le système central est doté de moyens physiques, notamment un modem et un programme d'ordinateur consacrés à la manutention du système par contrôle à la distance.

12. Dispositif selon la première revendication, caractérisée en ce que la transmission des demandes chargées dans les cartes (1) par les clients comprend, dans un groupe à côté, toutes les sélections d'articles qui les clients ont eu à remplacer suite à l'avertissement que les dites cartes (1) ont émis informant que les articles en question n'étaient plus disponibles dans le moment.

13. Dispositif selon la première revendication, caractérisée en ce que les cartes (1) comprennent des moyens destinés au paiement électronique.
